Europäisches Patentamt

(19) European Patent Office

Office européen des brevets

(11) EP 0 625 101 B1

(12) EUROPEAN PATENT SPECIFICATION

(45) Date of publication and mention
of the grant of the patent:
11.12.1996 Bulletin 1996/50

(21) Application number: 93903920.2

(22) Date of filing: 08.02.1993

(51) Int. Cl.⁶: $B60G\ 17/08$, B60G 17/015

(86) International application number:
PCT/EP93/00286

(87) International publication number:
WO 93/15924 (19.08.1993 Gazette 1993/20)

(54) **METHOD FOR CONTROLLING A DAMPER AND ITS USE IN A SUSPENSION DEVICE FOR A MOTOR VEHICLE**

VERFAHREN ZUM REGELN EINES DÄMPFERS UND SEINE ANWENDUNG IN EINER AUFHÄNGUNGSVORRICHTUNG EINES KRAFTFAHRZEUGS

PROCEDE DE COMMANDE D'UN AMORTISSEUR ET SON UTILISATION DANS UN DISPOSITIF DE SUSPENSION D'UN VEHICULE AUTOMOBILE

(84) Designated Contracting States:
**DE ES GB IT**

(30) Priority: **10.02.1992 FR 9201450**

(43) Date of publication of application:
**23.11.1994 Bulletin 1994/47**

(73) Proprietor: **SIEMENS AUTOMOTIVE S.A.**
**31036 Toulouse Cédex (FR)**

(72) Inventors:
• **POURNAIN, Michel**
**F-31490 Leguevin (FR)**
• **CONSTANS, Alain**
**F-31880 La Salvetat-S.-Gilles (FR)**
• **DROUAUD, Daniel**
**F-31840 Aussonne (FR)**
• **NOULEAU, Serge**
**F-31170 Tournefeuille (FR)**

(74) Representative: **Fuchs, Franz-Josef, Dr.-Ing.**
**Postfach 22 13 17**
**80503 München (DE)**

(56) References cited:
DE-A- 3 640 152    DE-A- 3 817 041
DE-A- 4 011 976    DE-A- 4 017 256
DE-A- 4 017 421    FR-A- 2 562 844
US-A- 4 696 489    US-A- 4 887 699
US-A- 4 936 425

## Description

The present invention relates to a method for controlling a damper or shock-absorber interposed between a suspended mass and an excited moving mass and, more particularly, to the use of such a method for controlling a damper forming part of a suspension device of the semi-active type for a motor vehicle.

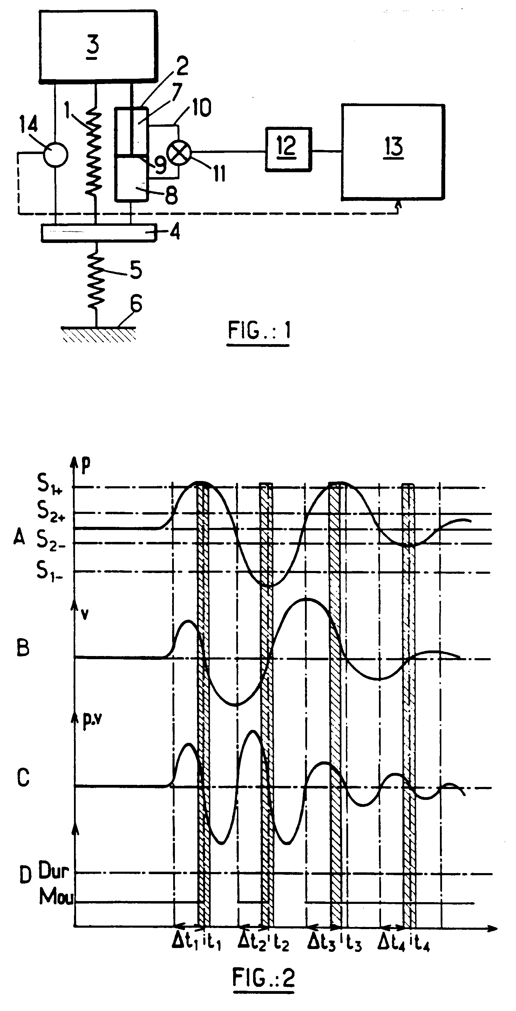

Figure 1 of the appended drawing diagrammatically represents a device of this type, known from the prior art. The device conventionally comprises a spring 1 and a damper 2 interposed between a suspended mass 3 and an excited mass 4. The suspended mass is made up of the part of the body of a motor vehicle which is supported by a wheel whilst the excited mass is made up of this wheel and a suspension arm for the wheel, shown diagrammatically in the figure by the mass 4 and the spring 5 representing the elasticity of a tyre fitted to the wheel which rests on the ground 6. The role of the damper 2 is to absorb the energy stored within this spring and masses system in order to prevent this energy from bringing about oscillations of the body and of the wheels of the vehicle, with respect to the ground.

The system made up of the wheel and its tyre, the suspension arm, the spring and the suspended mass has two resonant frequencies usually located within the band of 1 to 2 Hz for the suspended mass and within the band of 10 to 15 Hz for the excited mass. Damping is mainly used in order to reduce the amplitude of the oscillations in these two frequency bands. However, on the other hand, it reduces the capability of the suspension to filter at other frequencies.

So-called "adaptive" suspensions are known, in which the damping coefficient of the dampers is controlled by an electronic computer which processes representative measurements of the actions of the driver (angle of rotation of the steering wheel, acceleration, braking pressure, etc.) in order to stabilize the vehicle when it is stressed by such actions. Such adaptive suspensions also make it possible to take account of the driving style which the driver desires ("sporty" or "comfortable", for example) and of the average state of the road.

In order to take account of the stresses due to the deformations of the road, the damping coefficient of the damper can be varied in real time. A suspension system designed in this way is called "semi-active". The variation in damping may be obtained, for example, by controlling the flow rate of a liquid passing between the two chambers 7, 8 of the damper situated on either side of a piston 9. Thus, the liquid, which is driven from one chamber to the other when the piston moves under the effect of a variation in the distance which separates the masses 3 and 4, may flow, at a greater or lesser speed, into a duct 10 connecting these two chambers, as a function of the cross-section of a restriction 11 placed in the duct 10 and adjusted by an actuator 12 controlled by a computer 13 as a function of relative position and/or speed information of the masses 3 and 4, provided by a sensor 14.

The publication SAE 892483 of the Society of Automotive Engineers, entitled "The Control of Semi-Active Dampers Using Relative Feedback Signals", as well as US Patent 4,936,425, discloses a strategy for controlling the damper incorporated in such a device. According to this publication, the damping coefficient of the damper is increased by decreasing the surface-area of the restriction when the relative displacement of the wheel with respect to the body and the relative speed of the wheel with respect to this body have opposite signs. In other words, the damper is "firm" when the wheel returns to the equilibrium position (restoring the energy stored in the spring) and "elastic" when the wheel moves away from the equilibrium position (energy storage).

In order to do this, the sign of the product of the relative position p of the wheel with respect to the body, and the relative speed v is examined. The origin for the measurement of the position p is fixed at the equilibrium position assumed by the wheel under the influence of the mass of the body, in the absence of excitations which result from the vehicle driving over an uneven surface. If this product (p.v) is positive, the spring 1 stores energy, whilst if the product is negative, the spring 1 restores energy. Damping is usually brought into the elastic mode in the absence of movement between the wheel and the body and during energy storage phases. It is brought into the firm mode during energy restoring phases.

The application of this strategy for the entire range of frequencies of the movements of the wheel with respect to the ground enhances the behaviour of the suspension for the two resonant frequencies mentioned above. On the other hand, however, it is observed that it unfavourably limits the capability of the suspension to filter at other frequencies.

Document DE OS 36 40 152 proposes a damper in which the damping coefficient is frequency dependant and is thoroughly reduced in the frequency band between said resonant frequencies. However, this reduction is obtained by using band pass filters, causing phase shifts which could adversely affect the function of the damper and need additional hardware to be attenuated.

The object of the present invention is therefore to provide a method for controlling a damper, which can be used in a motor vehicle suspension device of the semi-active type described above, and which does not diminish the capability of this suspension to filter at frequencies other than the resonant frequencies of the suspended and excited masses of this supension respectively.

The object of the present invention is also to provide such a method which does not introduce any phase shifts which would disturb the control of the damper.

These objects of the invention, as well as others which will emerge upon reading the description which follows, are reached with a method for controlling a damper interposed between a suspended mass and an excited moving mass, in parallel with a spring, of the type in which the damper is selectively hardened when the sign of the product of the relative position and speed of the suspended mass with respect to the excited mass, becomes negative. According to the invention, the frequency of the movement of the suspended mass with respect to the excited mass is compared to at least one predetermined frequency band and the damper is hardened when the product function passes to a negative value only if, at this instant, the said frequency lies within the predetermined frequency band.

According to a preferred implementation of this method, the duration of one alternation of the product function is measured, and this duration is compared to two predetermined durations each associated with one of the limits of the predetermined frequency band, so as to establish whether or not the frequency of the movement of the suspended mass lies within the said frequency band. By virtue of this arrangement, no phase shift is introduced between the relative speed and position measurements and the control of the damper, as will be seen later.

According to another advantageous arrangement of the method according to the invention, the frequency of the product function is estimated from the duration of one alternation of this function which precedes the passage of the sign of the function from a positive value to a negative value.

According to another characteristic of the invention, the frequency of the movement of the suspended mass is compared to at least two frequency bands centred respectively on the resonant frequency of the suspended mass and on the resonant frequency of the excited mass of the system made up of the suspended mass, the spring, the damper and the excited mass.

According to another advantageous characteristic of the method according to the invention, the position of the suspended mass with respect to the excited mass is compared to at least one predetermined deflection of the suspended mass about the equilibrium position and the damper is hardened only if the said position is situated outside the said deflection at the instant at which the sign of the product function becomes negative. In the application of the method to controlling a motor vehicle suspension system, comfort is therefore favoured by avoiding hardening the suspension for low-amplitude movements of the body.

Other characteristics and advantages of the present invention will emerge upon reading the description which follows and upon examining the appended drawing, in which:

- Figure 1 is a diagrammatic representation of a suspension system of the semi-active type interposed between a wheel and the body of a motor vehicle, which diagram was described in the preamble of the present description,

- Figure 2 is a set of graphs which can be used to describe the method according to the invention,
- Figure 3 is a graph of the phase and amplitude response of a band-pass filter, which graph can be used to explain the origin of an advantageous characteristic of the method according to the invention,
- Figure 4 is a flow chart of the method according to the invention, and
- Figure 5 is a diagram of a control device making it possible to implement the method according to the invention.

This method will be described in its application to controlling a damper incorporated in a suspension device for a motor vehicle such as the one represented in Figure 1. The sensor 14 delivers a signal p representing the relative position between a suspended mass 3 made up of the part of the mass of the vehicle which is supported by one wheel and an excited mass (4, 5) made up of this wheel and a suspension arm for the wheel, this position being measured by its offset from the relative equilibrium position, in the absence of excitation. The position information p thus obtained is derived by the computer 13 so as to take from it the information about the relative speed v between the wheel and the body. This speed information may of course be obtained directly by a specific speed sensor.

The computer determines, from these two items of information, the product (p.v) function and monitors the evolutions of this function. As has been seen above, if the product is positive, since the position and the speed are of like sign, the device stores energy, whilst if the product is negative the device restores energy.

The computer 13 controls the actuator 12 and, consequently, the restriction 11 so that the damper remains elastic in the absence of movement between the wheel and the body and during the energy storage phases. The computer causes the flow rate of fluid in the restriction 11 to decrease during the energy restoring phases in order to harden the damper, according to the strategy described above.

For this purpose, reference will be made to the graphs of Figure 2 in which A represents a typical evolution in time of the relative position p between the wheel and the body, B represents the corresponding evolution of the relative speed between the wheel and the body and C represents the evolution of the product (p.v) function. The damping coefficient of the damper 2 evolves as represented by D between two values corresponding to a "soft" (or "elastic") damper and a "hard" (or "firm") damper respectively.

As has been seen above, the damping coefficient of the damper is usually adjusted by the computer to a level corresponding to a "soft" or "elastic" state for this damper. As illustrated by C and D in Figure 2, at an instant $t_1$ at which the product p.v function passes to a negative value, the computer 13 sharply increases the damping coefficient which passes to a level corresponding to a "hard" damper.

According to the invention, in order to optimise the operation of the suspension whose damping is thus controlled, the strategy of passing the damper into hard mode is only applied for relative movements between the wheel and the body whose frequencies correspond to one or other of the two resonant frequency bands previously defined, such as the resonance bands mentioned above, by way of example.

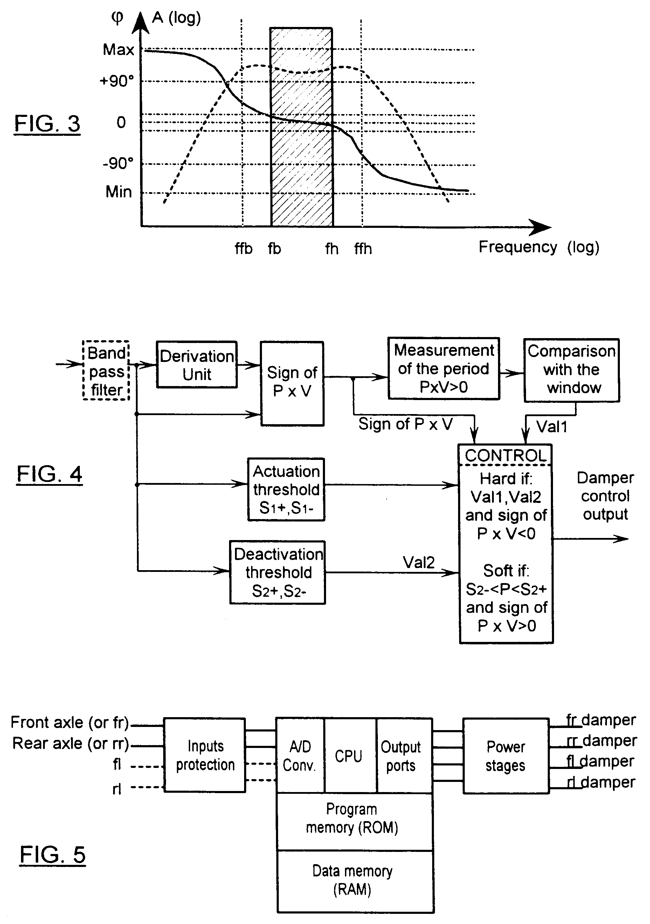

In order to do this, the movements of the wheel with respect to the body, which movements correspond to these resonant frequencies, may be taken by filtering the signal p which measures the relative wheel-body position with the aid of analogue or digital band-pass filters. The strategy for controlling the damper is therefore applied by processing the filtered signal. However, such a filter, be it analogue or digital, brings about a significant phase shift on either side of the cut-off frequencies, which phase shift becomes more significant as the order of the filter increases. This is illustrated in Figure 3 of the appended drawing in which the amplitude A and phase $\phi$ of such a band-pass filter have been represented in broken line and in solid line respectively, for a band ($f_b$, $f_h$) of cut-off frequencies $ff_b$ and $ff_h$ respectively. As shown in this figure, outside the band in question the phase shift may reach or exceed $\pm$ 90°. For certain frequencies, the damper may therefore be controlled in phase opposition, the damper being hard for energy storage phases and soft when energy is being restored, contrary to the strategy defined above.

According to an advantageous characteristic of the present invention, this drawback is avoided by, instead of using band-pass filters, measuring the duration $\Delta t_n$ of one alternation of the product function and by comparing this duration to two predetermined durations each associated with one of the limits of the predetermined frequency band ($f_b$, $f_h$) in order to determine whether or not the frequency of the product function lies within the frequency band in question.

The energy storage phase during which the damper is always soft is used in order to measure the duration $\Delta t_n$ corresponding to the first quarter of a period of the movement between the wheel and the body, as illustrated by A in Figure 2.

The duration of the energy storage phase $\Delta t_n$, during which the product p.v is positive, is measured and this duration must lie within a time window whose lower limit corresponds to the quarter of a period relating to the high frequency ($f_h$) and whose upper limit corresponds to the quarter of the period relating to the low frequency ($f_b$) of the frequency band of the movement between the wheel and the body, within which frequency band the strategy is to be applied.

Thus, as represented on the flow chart of Figure 4, the signal provided by the sensor 14 and representing the relative position p is derived so as to take the relative speed therefrom, and the computer 13 calculates the product p.v function and takes the sign of the latter. The period of the movement between the wheel and the body is taken, according to the present invention, from the measurement of the time interval $\Delta t_n$ during which the product function is positive. Incidentally, it will be noticed that the duration $\Delta t_n$ of one alternation of the product function is only used in order conveniently to measure the frequency of the movement between the wheel and the body, equal to half the frequency of the product function. The frequency of this movement could also be measured directly without using the product function.

When the computer detects that:

$$1/(4.f_b) > \Delta t_n > 1/(4.f_n)$$

the damper is allowed to pass to "hard" mode.

It will be noticed that this method for determining the position of the frequency of the relative movement of the body with respect to the limit frequencies $f_b$ and $f_h$ does not involve any filter, be it analogue or digital, and consequently does not introduce any phase shift in the switchovers in the damping coefficient of the damper with respect to the relative position measurements which initiate switchovers of this damping coefficient between at least the two values mentioned above. There is no longer any danger of phase shifts or of reversals of the strategy for controlling the damper for frequencies situated outside a frequency band centred on one or other of the resonant frequencies of the suspension device.

Thus, if the computer determines that $\Delta t_n$ is situated within the window defined above, a validation signal Val 1 is formed and used in a subsequent step of the control method according to the invention, as will be seen later.

When the product p.v returns to zero, the amplitude of the relative movement between the wheel and the body is at a maximum (positive or negative), the absolute value of this amplitude being representative of the quantity of energy stored. According to the present invention, in order to favour comfort and not to harden the suspension for low-amplitude movements, the damper is only hardened if this amplitude is greater than a certain predetermined value. It is for this reason that, according to the invention, and with reference to the graph A of Figure 2, the position of the body with respect to the wheel is compared to at least one predetermined deflection ($S_1+$, $S_1-$) about the equilibrium position and the damper is only hardened if the said position is situated outside the said deflection at the instant at which the sign of the product function passes to negative.

In this respect, it should be noted that since the stiffness of the suspension springs is very often non-linear, the quantity of energy stored may be different for identical amplitudes of movement about the equilibrium position. The thresholds $S_1+$, $S_1-$ may therefore be of different amplitude depending on their sign.

The thresholds $S_1+$ and $S_1-$ therefore constitute thresholds for which the strategy according to the invention for controlling the damper is actuated. The strategy is validated if, when the product p.v function passes to a negative value, the amplitude of the position p is greater than the threshold $S_1+$ or lower than the threshold $S_1-$. The thresholds $S_1+$ and $S_1-$ may vary as a function of the conditions of use of the vehicle (speed of the vehicle, sporty" or comfortable" driving style, etc.).

The "actuation threshold" block of the flow chart in Figure 4 therefore emits a validation signal Val 2 which is used at the same time as the sign of the previously defined product p.v and signal Val 1, in a block for controlling the damping coefficient of the damper.

Thus, in accordance with the method according to the invention, the damper passes into "hard" mode if, when the product p.v passes to a negative value, the signals Val 1 and Val 2 validate this passage to hard mode.

According to a variant of the product according to the invention, the damping coefficient of the damper is adjusted as a function of the quantity of energy stored, which quantity is evaluated by comparing the amplitude of the position signal p when the product p.v passes to negative, either continuously, or with several staged actuation thresholds as a function of the possibilities for controlling the damper.

The damper must be returned to the "elastic" mode at the end of the phase during which energy is restored, that is to say when the sign of the product p.v passes to positive. Since the displacement speed is derived, it risks being noisy especially when the speed passes to zero, because the original information representing the relative position passes through a zone of zero gradient. An oscillation of the p.v signal about zero at the end of the energy storage phase could be mistakenly interpreted as an end of the energy restoration phase.

In order to solve this problem, the decision to return to the "elastic" mode is only taken if the amplitude of the movement between the wheel and the body is less than a predetermined value. It is for this reason that, (as represented in the flow chart of Figure 4) the return to the elastic mode is controlled if the product p.v becomes positive and if the position signal p lies between an upper deactivation threshold $S_2+$ and a lower deactivation threshold $S_2-$.

When the damper returns to the elastic mode, the measurement for the time $\Delta t_n$ of the energy storage phase is reset to zero and the validation information Val 1 is set to the "false" state.

The evolution, with time, of the signals p and v, given by way of example in Figure 2 and processed by the control method according to the invention described above, has the effect of determining the following switchovers of the damping coefficient of the damper:

- at the instant $t_1$, $\Delta t_1$ is within the time window defined above whilst p exceeds the threshold $S_1+$, the signals Val 1 and Val 2 are in the "true" state, and the damper therefore passes to the "firm" or "hard" state,
- at the instant $t_2$, $\Delta t_2$ is within the time window whilst p is below the threshold $S_1-$, the signals Val 1 and Val 2 are in the "true" state, and the damper therefore also passes into the firm mode,
- at the instant $t_3$, $\Delta t_3$ exceeds the values defined by the time window, and $p > S_1+$, Val 1 = false and Val 2 = true, and the damper remains in the elastic mode,
- at the instant $t_4$, $\Delta t_4$ lies within the time window and $S_1- < p < S_1+$, Val 1 = true and Val 2 = false, and the damper still remains in the elastic mode.

Of course, in one case (not shown) in which Val 1 and Val 2 are both "false" the damper would remain in the elastic mode.

As represented in Figure 4 in a block in broken line, it is possible, in order to enhance the noise immunity of the method according to the invention, to filter the signal delivered by the relative position sensor 14 beforehand. The cut-off frequencies of the band-pass filter used for this purpose must then be chosen on either side of the useful frequency band so that the phase shift introduced by this filter remains low and does not disturb the method according to the invention.

The method according to the invention may be applied independently to the suspension systems associated with the four wheels of the vehicle. In this case, each suspension arm of one wheel must be equipped with a wheel-body relative position sensor.

The method may also be applied axle by axle. In this case, each axle is equipped with a sensor which measures the mean relative position of the two wheels of the axle with respect to the body, this sensor being installed, for example, on the anti-roll bar connecting the two wheels. The dampers of one same axle are therefore controlled simultaneously.

According to another implementation of the method according to the invention, this method is applied to the sum and/or difference of the relative positions $p_f$ and $p_r$ measured on the front and rear axles respectively, in order to adapt the suspension to correcting pitching movements ($p_f - p_r$) or pumping movements ($p_f + p_r$).

Figure 5 represents the diagram of the structure of a computer 13 for implementing the control method according to the present invention. This computer receives measurements of the relative positions of the front right (fr), front left (fl), rear right (rr), rear left (rl) wheels or of the front or rear axles with respect to the body of the vehicle, through a block for protecting the measurement inputs. The measurements pass into an analogue/digital converter before being used in a calculation unit working in conjunction with a program memory and a data memory. The calculation unit supplies orders to outlet ports controlling the actuators 12 used to adjust the damping coefficient of each of the dampers of the vehicle.

Of course, the invention is not limited to the embodiment described and represented, which was only given by way of example. Thus, the control method according to the invention extends to controlling the transmission of energy between two remote bodies, in general, and not purely to such a transmission between the wheels and the body of a motor vehicle.

## Claims

1. Method for controlling a damper interposed between a suspended mass and an excited moving mass, in parallel with a spring, of the type in which the damper is selectively hardened or softened when the sign of the product of the relative position (p) and speed (v) of the suspended mass with respect to the excited mass, becomes respectively negative or positive, characterised in that :

   - the frequency of the movement of the suspended mass with respect to the excited mass is evaluated from that of the product (p.v) function by measuring the duration ($\Delta t_n$) of one alternation of the product function, and comparing this duration to predetermined durations each associated with one of the limits of at least one predetermined frequency band, and
   - the damper is hardened when the product (p.v) function passes to a negative value only if, at this instant, the said frequency lies within the predetermined frequency band.

2. Method in accordance with Claim 1, characterised in that the frequency of the product function is estimated from the duration of one alternation of this function which precedes the passage of the function from a positive value to a negative value.

3. Method in accordance with any one of Claims 1 and 2, characterised in that the frequency of the movement of the suspended mass is compared to at least two frequency bands centred respectively on the resonant frequency of the suspended mass and on the resonant frequency of the excited mass of the system made up of the suspended mass, the spring, the damper and the excited mass.

4. Method in accordance with any one of Claims 1 to 3, characterised in that the position of the suspended mass with respect to the excited mass is compared to at least one predetermined deflection ($S_1+$, $S_1-$) of the suspended mass about the equilibrium position and the damper is hardened only if the said position is situated outside the said deflection at the instant at which the sign of the product function becomes negative.

5. Method in accordance with any one of Claims 1 to 4, characterised in that the position of the suspended mass is further compared to a second predetermined deflection ($S_2-$, $S_2+$) about its equilibrium position, while the product function passes to a positive value, and the damper is softened only if the said position lies within the said deflection ($S_2-$, $S_2+$).

6. Method in accordance with any one of Claims 1 to 5, characterised in that the position (p) of the suspended mass with respect to the excited mass is taken from a sensor (14) delivering a position signal and this signal is filtered in order to enhance the noise immunity of the method.

7. Method in accordance with any one of Claims 4 to 6, characterised in that the position (p) of the suspended mass with respect to the excited mass is compared with several predetermined deflections associated with as many different hardness levels of the damper, and the damper is hardened to a level associated with the deflection exceeded by the said position.

8. Use of the method in accordance with any one of Claims 1 to 7, for controlling a damper (2) forming part of a suspension device of a motor vehicle, this device comprising a spring (1) installed in parallel with the damper between a suspended mass made up of the body of the vehicle and an excited mass made up of a suspension arm supporting a wheel resting on a driving surface.

9. Use in accordance with Claim 8, characterised in that the two dampers of one same axle of the vehicle are controlled by taking into account the mean relative position and speed of the body with respect to the two wheels of the axle, instead of taking into account the relative position and speed of the suspended mass supported by a single wheel.

10. Use in accordance with Claim 8, characterised in that positions and speeds representing pitching and/or pumping movements of the body of the vehicle are taken into account instead of taking into account the relative position and speed of the body with respect to one wheel, so as to stabilise the body in pitching and/or in pumping, respectively.

## Patentansprüche

1. Verfahren zum Regeln eines Dämpfers zwischen einer aufgehängten Masse und einer angestoßenen, sich bewegenden Masse, parallel zu einer Feder der Bauart, bei der die Dämpfung wahlweise versteift oder weicher wird, wenn das Vorzeichen des Produktes aus der Relativlage (p) und der Geschwindigkeit (v) der aufgehängten Masse bezüglich der angestoßenen Masse entweder negativ oder positiv wird, dadurch gekennzeichnet, daß
die Frequenz der Bewegung der aufgehängten Masse bezüglich der angestoßenen Masse aus dem Produkt (p.v) gewonne wird, indem die Zeit-

dauer ($\Delta t_n$) einer Halbperiode des Produktes gemessen wird und diese Zeitdauer mit vorbestimmten Zeiten verglichen wird, die jeweils zu einem Grenzwert mindestens eines vorbestimmten Frequenzbandes gehören und

daß die Dämpfung nur dann versteift wird, wenn das Produkt (p.v.) negativ wird und in diesem Augenblick die besagte Frequenz in dem vorbestimmten Frequenzband liegt.

2. Verfahren nach Anspruch 1, dadurch gekennzeichnet, daß die Frequenz der Produktfunktion aus der Zeitdauer einer Halbperiode dieser Funktion geschätzt wird, die dem Durchgang der Funktion von einem positiven Wert in einen negativen Wert vorangeht.

3. Verfahren nach Anspruch 1 oder 2, dadurch gekennzeichnet, daß die Frequenz der Bewegung der aufgehängten Masse mit mindestens zwei Frequenzbändern verglichen wird, die jeweils mittig zur Resonanzfrequenz der aufgehängten Masse und zur Resonanzfrequenz der angestoßenen Masse des Systems liegen, das aus der aufgehängten Masse, der Feder, dem Dämpfer und der angestoßenen Masse besteht.

4. Verfahren nach einem der Ansprüche 1 bis 3, dadurch gekennzeichnet, daß die Lage der aufgehängten Masse gegenüber der angestoßenen Masse mit mindestens einer vorbestimmten Abweichung ($S_1+$, $S_1-$) der aufgehängten Masse von der Gleichgewichtslage verglichen wird und die Dämpfung nur dann versteift wird, wenn diese Lage außerhalb der Abweichung in dem Augenblick liegt, in dem das Vorzeichen der Produktfunktion negativ wird.

5. Verfahren nach einem der Ansprüche 1 bis 4, dadurch gekennzeichnet, daß die Lage der aufgehängten Masse ferner mit einer zweiten bestimmten Abweichung ($S_2$, $S_2+$) aus der Gleichgewichtslage verglichen wird, während die Produktfunktion positiv wird und die Dämpfung nur dann weich wird, wenn diese Lage innerhalb der besagten Abweichung ($S_2-$, $S_2+$) liegt.

6. Verfahren nach einem der Ansprüche 1 bis 5, dadurch gekennzeichnet, daß die Lage (p) der aufgehängten Masse gegenüber der angestoßenen Masse von einem Sensor (14) gemessen wird, der ein Lagesignal liefert, wobei dieses Signal gefiltert wird, um das Rauschverhalten für das Verfahren zu verbessern.

7. Verfahren nach einem der Ansprüche 4 bis 6, dadurch gekennzeichnet, daß die Lage (p) der aufgehängten Masse gegenüber der angestoßenen Masse mit mehreren vorbestimmten Abweichungen verglichen wird, die zu mehreren verschiedenen Steifigkeitswerten der Dämpfung gehören und die Dämpfung auf einen Wert versteift wird, der zu der Abweichung gehört, welche die besagte Lage übersteigt.

8. Anwendung des Verfahrens nach einem der Ansprüche 1 bis 7 zum Regeln eines Dämpfers (2), der Teil der Aufhängung eines Kraftfahrzeuges ist, wobei eine Feder (1) parallel zum Dämpfer zwischen einer aufgehängten Masse bestehend aus der Fahrzeugkarosserie und einer angestoßenen Masse, bestehend aus einem Abstützarm für ein auf einer Fahrbahn ruhenden Rad eingebaut ist.

9. Anwendung nach Anspruch 8, dadurch gekennzeichnet, daß die beiden Dämpfer einer Achse des Fahrzeugs angesteuert werden, wobei von der mittleren Relativlage und Geschwindigkeit der Karosserie in Bezug auf die beiden Räder der Achse ausgegangen wird, anstelle der Relativlage und der Geschwindigkeit der von einem einzelnen Rad aufgehängten Masse.

10. Anwendung nach Anspruch 8, dadurch gekennzeichnet, daß die Nickbewegungen und/oder Pumpbewegungen der Fahrzeugkarosserie darstellenden Lage- und Geschwindigkeitssignale anstelle der Relativlage und Geschwindigkeit der Karosserie gegenüber einem Rad herangezogen werden, um die Karosserie bei Nick- und/oder Pumpbewegungen zu stabilisieren.

## Revendications

1. Procédé de commande d'un amortisseur interposé entre une masse suspendue et une masse excitée en mouvement, en parallèle avec un ressort, du type suivant lequel on commande sélectivement un durcissement ou un assouplissement de l'amortisseur quand le signe du produit de la position (p) et de la vitesse (v) relatives de la masse suspendue par rapport à la masse excitée devient négatif ou positif, respectivement, caractérisé en ce que

on évalue la fréquence du mouvement de la masse suspendue par rapport à la masse excitée, à partir de celle de la fonction produit (p.v) par mesure de la durée ($\Delta t_n$) d'une alternance de la fonction produit et on compare cette durée à des durées prédéterminées associées chacune à une des limites d'au moins une bande de fréquence prédéterminée et

on commande le durcissement de l'amortisseur lors du passage de la fonction produit (p.v) à une valeur négative seulement si, à ce moment, ladite fréquence est comprise dans la bande de fréquence prédéterminée.

2. Procédé conforme à la revendication 1, caractérisé en ce qu'on estime la fréquence de la fonction produit à partir de la durée d'une alternance de cette fonction qui précède le passage de la fonction d'une valeur positive à une valeur négative.

3. Procédé conforme à l'une quelconque des revendications 2 à 4, caractérisé en ce qu'on compare la fréquence du mouvement de la masse suspendue à au moins deux bandes de fréquence centrées respectivement sur la fréquence de résonance de la masse suspendue et sur la fréquence de résonance de la masse excitée du système constitué par la masse suspendue, le ressort, l'amortisseur et la masse excitée.

4. Procédé conforme à l'une quelconque des revendications 1 à 3, caractérisé en ce qu'on compare la position de la masse suspendue par rapport à la masse excitée, à au moins une excursion $(S_{1+}, S_{1-})$ prédéterminée autour de la position d'équilibre de la masse suspendue et on commande le durcissement de l'amortisseur seulement si ladite position est située en dehors de ladite excursion au moment où le signe de la fonction produit devient négatif.

5. Procédé conforme à la revendication 7, caractérisé en ce qu'on compare en outre la position de la masse suspendue à une deuxième excursion prédéterminée $(S_{2-}, S_{2+})$ autour de sa position d'équilibre, pendant le passage de la fonction produit à une valeur positive et on commande l'assouplissement de l'amortisseur seulement si ladite position est comprise dans ladite excursion $(S_{2-}, S_{2+})$.

6. Procédé conforme à l'une quelconque des revendications 1 à 5, caractérisé en ce qu'on tire la position (p) de la masse suspendue par rapport à la masse excitée, d'un capteur (14) délivrant un signal de position et on filtre ce signal pour accroître l'immunité au bruit du procédé.

7. Procédé conforme à l'une quelconque des revendications 4 à 6, caractérisé en ce qu'on compare la position (p) de la masse suspendue par rapport à la masse excitée, à plusieurs excursions prédéterminées associées à autant de niveaux de durcissement différents de l'amortisseur, et on commande le durcissement de l'amortisseur jusqu'au niveau associé à l'excursion dépassée par ladite position.

8. Utilisation du procédé conforme à l'une quelconque des revendications 1 à 7, pour la commande d'un amortisseur (2) formant partie d'un dispositif de suspension d'un véhicule automobile, ce dispositif comprenant un ressort (1) installé en parallèle sur l'amortisseur entre une masse suspendue constituée par la caisse du véhicule et une masse excitée constituée par un bras de suspension supportant une roue en appui sur une surface de roulement.

9. Utilisation conforme à la revendication 8, caractérisé en ce qu'on commande de même les deux amortisseurs d'un même essieu du véhicule en prenant en compte la position et la vitesse relatives moyennes de la caisse par rapport aux deux roues de l'essieu, en lieu et place de la position et de la vitesse relative de la masse suspendue supportée par une seule roue.

10. Utilisation conforme à la revendication 8, caractérisé en ce qu'on prend en compte des positions et vitesses représentatives de mouvements de tangage et/ou de pompage de la caisse du véhicule, en lieu et place de la position et de la vitesse relatives de la caisse par rapport à une roue, pour stabiliser la caisse en tangage et/ou en pompage, respectivement.

FIG.: 1

FIG.:2

FIG. 3

FIG. 4

FIG. 5